(19) **Europäisches Patentamt / European Patent Office / Office européen des brevets**

(11) **EP 4 523 015 B1**

(12) **EUROPEAN PATENT SPECIFICATION**

(45) Date of publication and mention of the grant of the patent:
**08.07.2026 Bulletin 2026/28**

(21) Application number: **23723909.0**

(22) Date of filing: **02.05.2023**

(51) International Patent Classification (IPC):
**G01T 1/17** *(2006.01)* **G01T 1/20** *(2006.01)*

(52) Cooperative Patent Classification (CPC):
**G01T 1/20184; G01T 1/17; H04N 25/773**

(86) International application number:
**PCT/EP2023/061521**

(87) International publication number:
**WO 2023/217584 (16.11.2023 Gazette 2023/46)**

(54) **PHOTON COUNTING DETECTOR AND PHOTON COUNTING METHOD**

PHOTONENZÄHLDETEKTOR UND PHOTONENZÄHLVERFAHREN

DÉTECTEUR DE COMPTAGE DE PHOTONS ET PROCÉDÉ DE COMPTAGE DE PHOTONS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **10.05.2022 EP 22172537**

(43) Date of publication of application:
**19.03.2025 Bulletin 2025/12**

(73) Proprietor: **Koninklijke Philips N.V.**
**5656 AE Eindhoven (NL)**

(72) Inventors:
• **SOLF, Torsten, Jörn**
  **5656 AG Eindhoven (NL)**
• **SHABER, Mezbah, Uddin**
  **5656 AG Eindhoven (NL)**
• **FRACH, Thomas**
  **5656 AG Eindhoven (NL)**

(74) Representative: **Philips Intellectual Property & Standards**
**High Tech Campus 34**
**5656 AE Eindhoven (NL)**

(56) References cited:
JP-A- 2003 043 149     US-A1- 2011 017 918
US-A1- 2016 146 949

**Description**

FIELD OF THE INVENTION

The present invention relates to a photon counting detector, a corresponding photon counting method and an imaging apparatus comprising a photon counting detector for detection of radiation, in particular gamma radiation and x-ray radiation.

BACKGROUND OF THE INVENTION

Photon counting has conventionally been implemented using photomultiplier tube (PMT) detectors, which comprise a light-sensitive photocathode and a set of "multiplier" anode terminals. The photocathode emits at least one electron responsive to impingement of a photon, and the electron(s) in turn strike successive anode terminals with each such event causing emission of a cascade of electrons, thus producing a multiplication effect that results in a measurable electrical pulse. A PMT is capable of high speed photon counting. PMT detectors have disadvantages including being relatively bulky discrete devices with large optical windows that operate at high voltage and are susceptible to failure due to the evacuated tube design and the high operational electrical voltage.

Silicon photomultiplier (SiPM) devices have been developed to overcome some of these disadvantages, and to provide photon-counting detectors that are readily integrated with silicon-based signal/data processing circuitry. In some embodiments, a SiPM device employs an avalanche photodiode as the light sensor. When biased above its breakdown voltage, the avalanche diode goes into break down responsive to impingement of a single photon. Such a device is sometimes called a single photon avalanche diode (SPAD) detector. In a typical SPAD detector, the avalanche photodiode is reverse biased above its break down voltage and is in series with a quenching resistor. Impingement of a single photon causes the p-n junction to break down in a multiplicative (i.e., "avalanche") cascade of electrons that flow in the SPAD detector as a measurable electrical current. This current is quenched relatively quickly as voltage over the resistor due to the current flow lowers the reverse bias across the avalanche diode to a level below its break down voltage. Additionally or alternatively, an active quenching sub-circuit comprising (for example) one or more diodes, resistors, and/or transistors can provide more rapid quenching. Some illustrative examples of SiPM detector arrays are disclosed US 9,268,033 B2 and US 10,078,141 B2.

US2011017918 A1 discloses a radiation detector with a scintillator element converting an incident photon into a burst of optical photons and a pixel determining numbers of optical photons in multiple acquisition intervals within the burst duration. Digital sampling using detector cells, preferably Geiger-mode APDs, enables temporal resolution of the burst, single-photon detection, pile-up correction, energy discrimination, and integration at high photon rates.

Analog SiPMs sum all SPAD signals of a matrix (forming a pixel) together, which can be digitized by an ASIC to get individual energy estimates for each gamma quanta. The impulse response of an analog SiPM is mainly determined by the passive quenching resistor and the SPAD capacity (RC component), which can lead to uncontrolled recharge, non-linear behavior (incomplete recharge), and excessive power consumption at high optical flux from the scintillator (or ambient light). Therefore, pulse integrals from gamma energy estimates can suffer from these non-linearities. In addition, secondary effects like local temperature rise due to high power consumption can lead to gain drifts due to changes in the breakdown voltage.

Digital silicon photomultipliers (dSiPMs) composed of single photon avalanche detector (SPAD) matrices are used as photon counting detectors (sometimes also called photon detectors) in high-performance PET/CT systems to detect single gamma quanta. Coupled to a time-of-flight capable scintillator, the fast trigger logic of the digital silicon photomultiplier enables time resolution in the range of 100 ps - 200 ps. Time resolution of these systems is limited, among others, by the time spread of the scintillation process. New detector concepts using prompt photons have been proposed, potentially offering improvement of time resolution significantly below 100 ps.

However, high count rates limit the dynamic range especially in direct beam or body peripheries with low attenuation. Thus, for high count rates, the pulses overlap in time (optical pile-up), deteriorating the received energy resolution noticeably.

SUMMARY OF THE INVENTION

It is an object of the present invention to resolve or at least reduce the problem of pile-up of detector pixels.

In a first aspect of the present claimed invention a photon counting detector is presented comprising:

   a scintillator configured to convert incident gamma radiation into optical photons; a pixelated photodetector configured to detect the flux of optical photons wherein the pixelated photodetector is a silicon photomultiplier, SiPM, detector, wherein each photodetector pixel comprises an array of silicon avalanche photo diodes, SPADs; and

circuitry configured to carry out, per photodetector pixel, the steps of

- controlling a stop timing at which one or more functions of the photodetector pixel are stopped;
- determining a first photon count by accumulating the number of optical photons detected by the SPADs of the respective photodetector pixel from the start of an integration period up to the stop timing; and
- estimating a second photon count based on the first photon count and the stop timing, the second photon count representing an estimate of the photon count for the total integration period.

In a further aspect of the present claimed invention a corresponding photon counting method is presented.

In a still further aspect of the present invention an imaging apparatus comprising a photon counting detector as disclosed herein is presented.

Preferred embodiments of the invention are defined in the dependent claims.

High count rates limit the dynamic range especially in direct beam or body peripheries with low attenuation. As light yield of very fast scintillators is normally quite low, it is not beneficial to use very short integration times (below the decay time of the scintillator), which would result in a poor energy resolution and loss in spectral information. Thus, a compromise should be found to balance spectral separation vs. count rate capability, which is normally fixed by design and cannot be adapted to the individual scan dynamically. Further, for high count rates, the pulses overlap in time and lead to optical pile-up, which deteriorates the received energy resolution.

The present invention overcomes or at least reduces this drawback by providing, per photodetector pixel, an individual control to stop one or more functions of the pixel to stop the operation and thus avoid optical pile-ups and additionally save power. The one or more functions may generally be any operation function of the pixel that avoids - if stopped - high (undesired) count rates, such as the pixel logic, any logic circuit(s), adder(s), state machine(s), etc. In an embodiment, even the entire pixel (including all functions and units) may be stopped.

To ensure that the photon count for the complete integration period is correct, even if the operation of the pixel before the end of the integration period is stopped, an estimation is provided for the complete integration period based on the photon count from the start of the integration period up to the stop timing. This estimation may e.g. be based on a kind of interpolation.

In a preferred embodiment the circuitry is configured to apply, per SPAD or groups of SPADs, a recharge signal to the respective one or more SPADs for recharging after a breakdown in response to impingement of an optical photon, and to control, per photodetector pixel, as stop timing a recharge stop timing at which the application of a recharge signal to the respective one or more SPADs is stopped. For instance, in an implementation of this embodiment, a fully digital SPAD matrix with individual recharge control per SPAD array (photodetector pixel) may be used to prevent saturation of energy histograms and to limit power consumption within the integration period. The recharge of a pixel can be stopped by a programmable recharge control logic conditionally.

In another implementation of this embodiment, a fully digital SPAD matrix with active quenching for each SPAD may be provided, including static enable/disable and dynamic recharge control. The pulses are summed digitally, avoiding analog drifts and thresholds to provide linearity and stability over time and temperature. In such an implementation, each pixel of the pixelated photodetector comprises a plurality of cells, wherein each cell may comprise:

- a SPAD reverse-biased above a breakdown voltage of the SPAD;
- trigger logic connected to the SPAD and configured to output a trigger signal indicating whether the SPAD is in breakdown; and
- a conditional recharge circuit configured to recharge the SPAD conditional upon both (i) the recharge circuit applying the recharge signal to the cell and (ii) the trigger signal output by the trigger logic of the cell indicating the SPAD of the cell is in breakdown.

There are different options how to estimate the second photon count. In one embodiment, the circuitry is configured to estimate the second photon count based on the first photon count and the time ratio of a non-measurement time period from the stop timing to the end of the integration period divided by a measurement time period from the start of the integration period to the stop timing. For instance, the circuitry may estimate the second photon count by adding to the first photon count the product of the first photon count with the time ratio.

In another embodiment the circuitry comprises a time counter configured to count the time period from the start of the integration period up to the stop timing and wherein the circuitry is configured to use this time period for estimating the second photon count. Thus, in such an embodiment the integration time from start of the integration period up to the individual stop may be stored by an integrated counter providing the actual and precise integration time (e.g. in ns range) to precisely compute radiation rate estimates. The circuitry may thus act like a pixel-based exposure control, preventing any over-exposure at any time to provide 100% useful acquisition data for image reconstruction.

In another embodiment the circuitry comprises a system counter configured to oversample the integration period and to count the number of sub-sampling periods from the start of the integration period up to the stop timing, wherein the circuitry is configured to use this time period for estimating the second photon count. This embodiment does not use individual counters, but uses an additional system clock which oversamples the integration period to provide a fixed number of possible integration times. This embodiment reduces the complexity for data processing since no individual counter values have to be stored and processed. Further, a fixed number of oversampled integration periods (preferably by a power of two higher sampling as the integration period) can be used effectively to interpolate the expected count rates for every pixel.

In another embodiment the circuitry is configured to predict the position of an examination object with respect to the photon counting detector in the subsequent integration period and to control the stop timing based on the predicted position. For instance, the stop timing may be controlled based on the predicted position by stopping operation and/or recharging of the SPADs of photodetector pixels that are predicted not to be covered by parts of the examination object earlier compared to SPADs of photodetector pixels that are predicted to be covered by parts of the examination object. Hereby, in an implementation, the circuitry may be configured to predict the position of an examination object with respect to the photon counting detector in the subsequent integration period based on a scout scan or image information.

Such an embodiment may incorporate an exposure control coefficient, which may be used along with the embodiment using a system counter to control the duty cycle of the oversampling clock based on a region-of-interest prediction model. The prediction model may be built using a standard camera and machine learning algorithms to process the subject-of-interest's or object-of-interest's projection edge detection on the detector (depending on its angular position). In a simple implementation this prediction model can be used to switch-off (by disabling) pixels in a certain part of the detector's area where it is exposed to direct beam and does not contribute to any post-processing.

In still another embodiment the circuitry is configured to control, per photodetector pixel, the stop timing based on a stop condition. Different conditions may be used as stop condition. For instance, in an implementation, the stop condition may be represented by the detection that one or more energy bins of the respective photodetector pixel have exceeded a respective count threshold. In another implementation, the stop condition may be represented by the detection that the number of optical photons of the respective photodetector pixel has exceeded a respective photon threshold. For instance, a pixel may then comprise, next to the energy bins, an accumulator counting the number of optical photons detected from the beginning of the integration period. When this accumulator reaches a user-defined threshold, the operation and/or recharge of the pixel may be stopped as it can be assumed that enough statistics have been collected.

The circuitry may further be configured to integrate the optical flux and determine an integration value up to the stop timing.

## BRIEF DESCRIPTION OF THE DRAWINGS

These and other aspects of the invention will be apparent from and elucidated with reference to the embodiment(s) described hereinafter. In the following drawings

Fig. 1 shows diagrams of typical decay curves and integral curves (depending on integration time) for a conventional photon counting detector.
Fig. 2 shows a schematic diagram of a first embodiment of a photon counting detector according to the present invention.
Fig. 3 shows diagrams of a logical integration period signal, a photon count signal and a stop control signal that may be used in the first embodiment of the photon counting detector.
Fig. 4 shows a schematic diagram of a second embodiment of a photon counting detector according to the present invention.
Fig. 5 shows a circuit diagram of an embodiment of a detector cell of a photon counting detector according to the present invention.
Fig. 6 shows time diagrams of a recharge operation.
Fig. 7 shows diagrams of a logical integration period signal, a logical oversampling signal, a photon count signal and a stop control signal that may be used in another, more simplified embodiment of the photon counting detector.
Fig. 8 shows a schematic diagram illustrating a third embodiment of a photon counting detector according to the present invention.

## DETAILED DESCRIPTION OF EMBODIMENTS

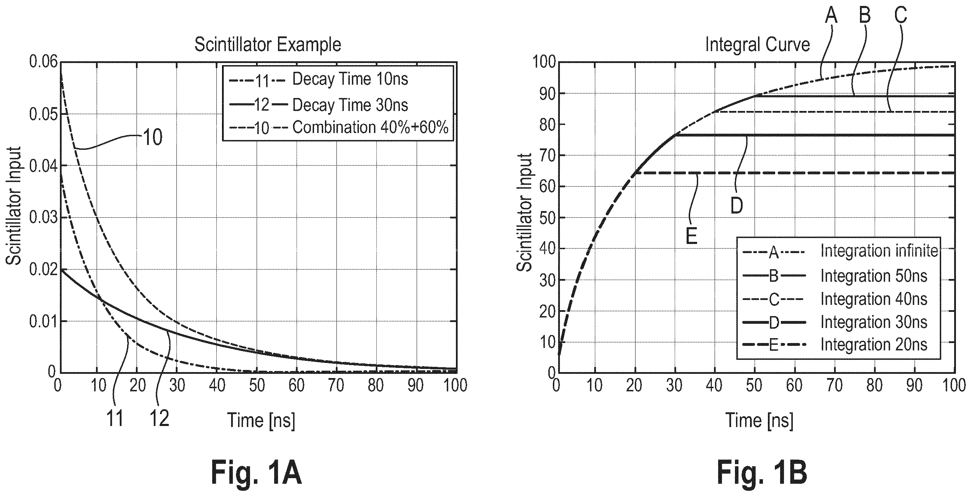

Fig. 1 shows diagrams of typical decay curves and integral curves (depending on integration time) for a conventional photon counting detector. Fast scintillators often exhibit two or more decay components with different weighting, depending on the material properties including chemical composition, energy bands, excitation stages, doping, and co-doping profiles, etc. Fig. 1A shows a typical scintillator decay curve 10, which is composed of a short decay component 11 and a long decay component 12. Fig. 1B shows the integral for this example with different integration time (also called integration lengths).

In case of single gamma counting, the spectral separation depends strongly on the amount of collected light of the pixelated photodetector, e.g. through a SPAD matrix. As an example, the shorter integration (e.g. of 20 ns; curve E in Fig. 1B) may e.g. collect about 63 % of the light whereas the longer integration (e.g. of 40 ns; curve C in Fig. 1B) may e.g. collect about 86 % of the light, resulting in an improved energy resolution with the drawback of higher count loss at high rates. The present invention describes how to overcome this compromise.

The detection system of a CT is typically rotating with the source and the curved detector is typically built of a multitude of individual modules, each comprising a multitude of sensor tiles. Each sensor tile is electrically, mechanically, and thermally connected to a module, providing power, clock, signals, etc. The sensor tile is composed of a multitude of silicon dies, each having a multitude of pixels, aligned with the scintillation array pixel pitch.

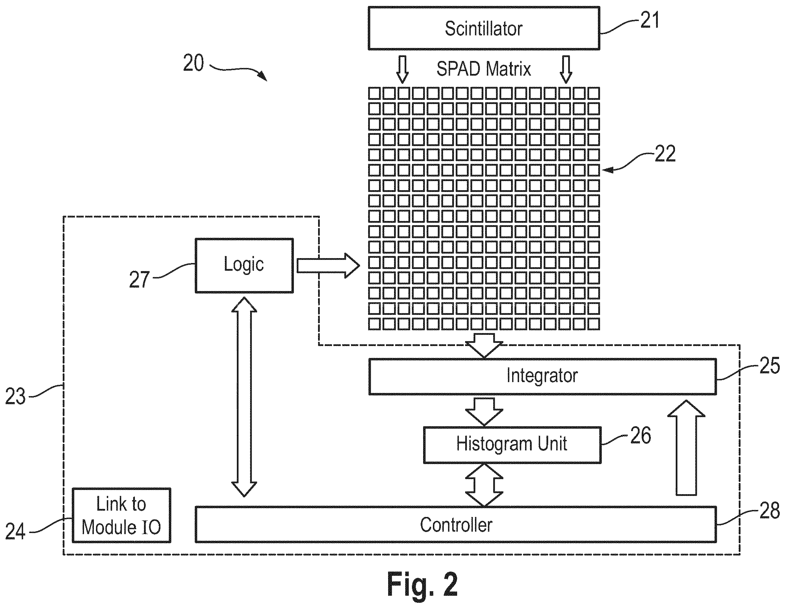

Fig. 2 shows a schematic diagram of a first embodiment of a photon counting detector 20 according to the present invention. The detector 20 generally comprises a scintillator 21 configured to convert incident gamma radiation into optical photons, a pixelated photodetector (represented by a SPAD matrix 22) configured to detect the flux of optical photons, and circuitry 23 (or corresponding units) configured to further process / evaluate the detected optical photons.

In more detail, Fig. 2 shows a single pixel of a sensor die including - in this embodiment - a SPAD matrix 22, on one hand, and a link 24 to an IO (input / output) module on the other hand. The IO module is e.g. provided for input / output of data, clock, integration period control, commands, power, etc. The scintillation light of from gamma rays is collected by the SPAD matrix 22. A programmable photon accumulator 25 (also called integrator) computes the sum of each acquired pulse (in particular a programmable number of samples) and stores it in a histogram unit 26 that uses suitable (optionally programmable) thresholds. Therefore, the state of the SPADs may be read out synchronously to a reference clock and added by the accumulator 25. A programmable number of samples are added to generate an energy estimate of the absorbed radiation quanta and stored in the energy histogram. In parallel, true integration mode may also be provided (not shown Fig. 2), which is often use in CT detection.

A controller 28 (or processor) takes care of several aspects. It may control the accumulator 25, the histogram unit 26 and a logic circuit 27 (e.g. a pixel logic for addressing or controlling the pixels of the SPAD matrix 22). Further, at the start of an integration period, which also indicates the end of the previous integration period, the histogram data are buffered and sent downstream into a downstream datalink 24 towards the IO module, followed by a reset to initialize the histogram data for the next integration period.

During the integration period, histogram counts increase, and the SPAD is active until a stop condition is reached. This stop condition may e.g. be derived by a controller logic (e.g. the controller 28), e.g., if one or several energy bins have exceeded a given number of counts. The controller logic may be programmable, optionally including several energy bins and programmable thresholds for every bin, and/or it may be a combination of "OR" and/or 'AND" logic of the different sub-conditions. The logic may also be overruled by settings from a command interface (e.g. of the IO module) which may be controlled by the acquisition system.

Whenever the stop condition occurs, one or more functions or operations of the pixel are disabled/stopped so that no more photons are actually counted. For instance, the operation of the accumulator 25 and/or the histogram unit 26 and/or the logic circuitry 27 may be disabled or controlled to stop counting or integrating photons at a controlled stop timing. Optionally, a true integration value from the start of the integration period may be stored in an integration sum until the stop signal.

To determine the correct photon count, although the counting has been stopped before the end of the integration period, a first photon count may be determined by accumulating the number of optical photons detected by the SPADs of the respective photodetector pixel from the start of an integration period up to the stop timing. This is the actual measurement while the pixel (or function(s) thereof) has been enabled. Then, a second photon count may be estimated based on the first photon count and the stop timing so that the second photon count represents an estimate of the photon count for the total integration period.

The integration period is usually in the range of 100 $\mu$s and could e.g. range from 50 $\mu$s to 500 $\mu$s. Depending on the radiation flux (e.g. gamma flux), the integration can be stopped significantly earlier than the end of the integration period would suggest. This often happens during direct beam exposure where histogram counters could easily be saturated. The present invention ensures a pixel-based stop, preferably for every integration period throughout the complete detection system.

The logic for the stop condition can be defined dynamically, e.g. depending on the angle and position of the detector, also including a-priori knowledge for example of a scout scan to reduce integration time of certain areas upfront, as described below in more detail. In case true integration mode is implemented, the integral is stopped and corrected. As a large portion of the power consumption of the detector depends linearly on the incoming optical flux, the proposed control of the stop timing can reduce power consumption during acquisition by over a magnitude, e.g. stopping one or more functions for one or more pixels or by limiting recharge in unused areas of the detector. The reduced power consumption simplifies thermal design and inherently improves gain stability.

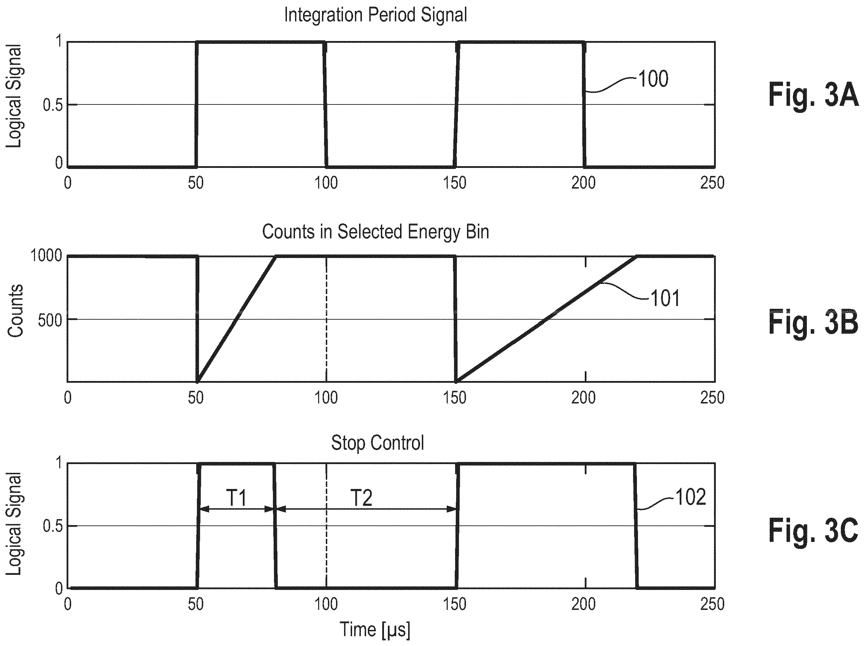

Fig. 3 shows diagrams of a logical integration period signal 100 (Fig. 3A), a photon count signal 101 (Fig. 3B) and a stop control signal 102 (Fig. 3C) that may be used in the first embodiment of the photon counting detector. The integration period starts the photon count collection in a histogram. The integration (and/or other function(s)) is stopped when a certain stop condition is met.

It can be seen in Fig. 3A that the integration period of (in this example) 100 $\mu$s starts the pulse integration of a pixel and histogram generation with ever rising edge (in this example at time 50 $\mu$s). If the radiation rate is very high, exceeding several thousand hits within an observation time, this often correlates with direct beam exposure. Due to the high incident rate, the S/N of this area can be limited without degradation in the reconstructed image. Additionally, energy bin overflow can be avoided if the integration (and/or other function(s)) is disabled if a certain condition is met. In an example an energy bin filling exceeding a certain threshold (e.g. 1024 as an example shown in Fig. 3B) may be used as a stop condition with the next rising edge of the reference clock. Thus currently measured photon count up to this moment (first photon count) may then be used to estimate the total photon count (second photon count) for the complete integration period, i.e., to predict the photon count for the remaining time of the integration period. This may be done based on the time ratio between the time period T1 (first part of the integration period) during which the photon counting was enabled and the time period T2 (second part of the integration period) during which the photon counting was disabled.

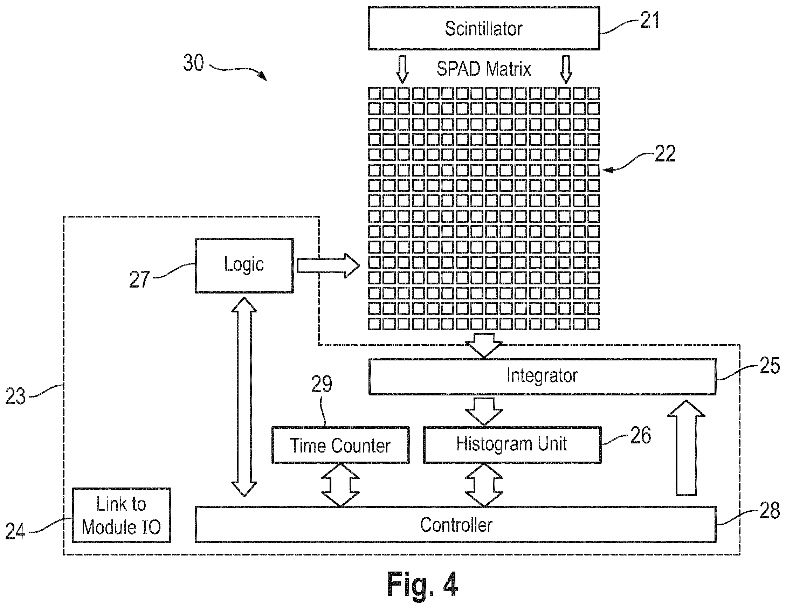

In an embodiment that will be explained in more detail below, a corresponding time counter (which is always reset at the beginning of the integration period), may be latched and copied into the data stream for rate calculation. In the above example, the photon counting is disabled after 30 $\mu$s (= T1 from 50 $\mu$s to 80 $\mu$s in the example shown in Fig.3), which saves considerable power for the rest of this integration period of 70 $\mu$m (= T2, from 80 $\mu$s to 150 $\mu$s). In the above example, the effective integration period can vary during runtime, as well as the incident radiation rate, and histogram overflow can be avoided at any time. In this example, the integration starts at 50 $\mu$s (absolute) and stops at 80 $\mu$s so that high power consumption is only given during a period of 30 $\mu$s (= T1). For the remaining time period (T2 = 70 $\mu$s) the power consumption on the recharge is zero. Since the counting stops after T1 (at 80 $\mu$s), the rate is calculated by the ratio of collected events (in the histogram counter 26) within T1 divided by the time T1 (e.g. as measured by a time counter 29 as shown in Fig. 4). In case T1 = 50 $\mu$s and the remaining time period is T2 = 50 $\mu$s, then the rate is simply calculated by doubling the values.

In the diagrams shown in Fig. 3 the normal use case for moderate and low radiation rates is not shown. There, the integration is only stopped by the start of the next integration period. The time counter than corresponds to the effective integration period.

Fig. 4 shows a schematic diagram of a second embodiment of a photon counting detector 30 according to the present invention. In addition to the detector 20 shown in Fig. 2 the detector 30 comprises a time counter 29 that stores the effective integration time (T1 in Fig. 3C). The controller 28 may control the effective integration length e.g. from the filling of the histogram data (and/or controlled by module commands) to steer the logic circuit 27 and time counter 29 by use of the stop control signal to stop counting. For instance, the time counter may be latched and the acquisition of histogram data may be stopped simultaneously. Like the histogram unit 26, the time counter 29 is reset at the end of an integration period.

The time counter 29 can store the effective integration time precisely where the granularity may be given by a centrally distributed reference clock. Typical values are in the range of 100 MHz to 300 MHz

The histogram counts of every integration period and pixel can be restored if counting is stopped before the official end of the integration period. The correct radiation rate may by computed by the histogram counts divided by the corresponding time counter values. This computation may be realized in an FPGA or during post-processing on a processor or computer as follows:

$$rate\_corrected = counts\_detected * time\_counter/(integration\_period*clock\_frequency).$$

In another embodiment, the logic circuit 27 may be implemented as a recharge logic. The recharge logic may be controlled by the controller 28 to be enabled at the start of the integration period and disabled either at the end of the integration period or at an earlier stop timing when a stop condition occurs. Thus, in this embodiment, per SPAD or groups of SPADs, a recharge signal may be applied to the respective one or more SPADs for recharging after a breakdown in response to impingement of an optical photon, and, per photodetector pixel, a recharge stop timing may be controlled at which the application of a recharge signal to the respective one or more SPADs is stopped.

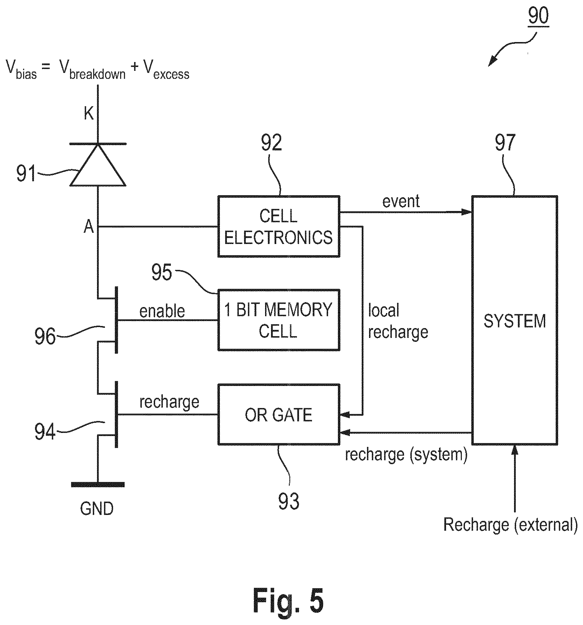

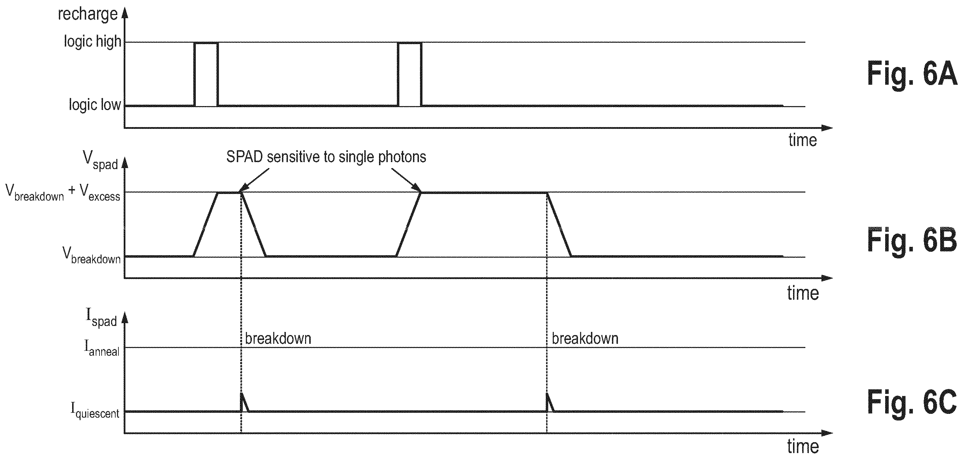

Fig. 5 shows an embodiment of a circuit diagram of a detector cell 90 of a pixelated digital radiation detector according to the present invention. Fig. 6 shows time diagrams of a normal SPAD operation. Herein, Fig. 6A shows a logic recharge signal, Fig. 6B shows the SPAD voltage $V_{spad}$ across the SPAD 91, and Fig. 6C shows the SPAD current $I_{spad}$ through the SPAD 91.

During operation, a local recharge signal (or system recharge signal) is applied by cell electronics 92 to an OR gate 93 to close a first switch 94 (recharge switch) so that the anode A of the SPAD 91 is connected to ground GND. Further, an enable signal from a memory 95 closes a second switch 96 (enable switch). The enable switch 96 disconnects the SPAD from the recharge switch 94, i.e., when the memory 95 is set to 0 the SPAD will not be recharged and when the memory 95 is set to 1 it will close the enable switch 96 and connect the SPAD to the recharge.

The enable switch 96 and the memory 95 may be omitted in other embodiments. Further, in other embodiments no OR gate 93 is provided and only a local recharge signal or a system recharge signal is used to control the recharge switch 94.

The SPAD voltage $V_{spad}$ (the bias voltage) ramps up from the breakdown voltage $V_{breakdown}$ to a higher voltage $V_{breakdown} + V_{excess}$. The SPAD is now sensitive to single photons. A photon arriving at the SPAD (an event) leads to a short increase of the current $I_{spad}$ through the SPAD above the quiescent current $I_{quiescent}$ and a breakdown so that the SPAD voltage $V_{spad}$ breaks down and decreases back to (or even below) the breakdown voltage $V_{breakdown}$. Afterwards, the SPAD is recharged again to make it sensitive for photon arrival.

According to the present invention, the recharging may be disable at a stop timing, meaning that e.g. the recharge switch 94 is controlled (by a local recharge signal or a system (more global; e.g. per pixel or groups of SPADs) recharge signal to remain open for the remaining time of the integration period and thus avoid recharging. The SPAD 91 is thus not made sensitive to impinging photons which are thus no longer counted.

Another embodiment of the disclosed photon counting detector represents a simplified version of the embodiment shown in Fig. 4. In this embodiment, no individual time counters are provided and counting can be simplified significantly, which saves space in the layout and reduces data bandwidth and processing time. Such an implementation requires an additional oversampled integration period. This may e.g. be a power of two, realized e.g. by a PLL, to generate sub-periods of equal size. However, sub-sampling can be realized with arbitrary intervals for dynamic compression. Therefore, only the sub-sampling periods may be counted, stored, and transmitted. As the counter does not run with a high-speed reference clock, as it is driven by sub-sampling the integration period, only a few bits are needed for this information: For example, only 4 bits may be used when using an oversampling of 16, whereas 16 bits are needed for the reference clock synchronous integration stop.

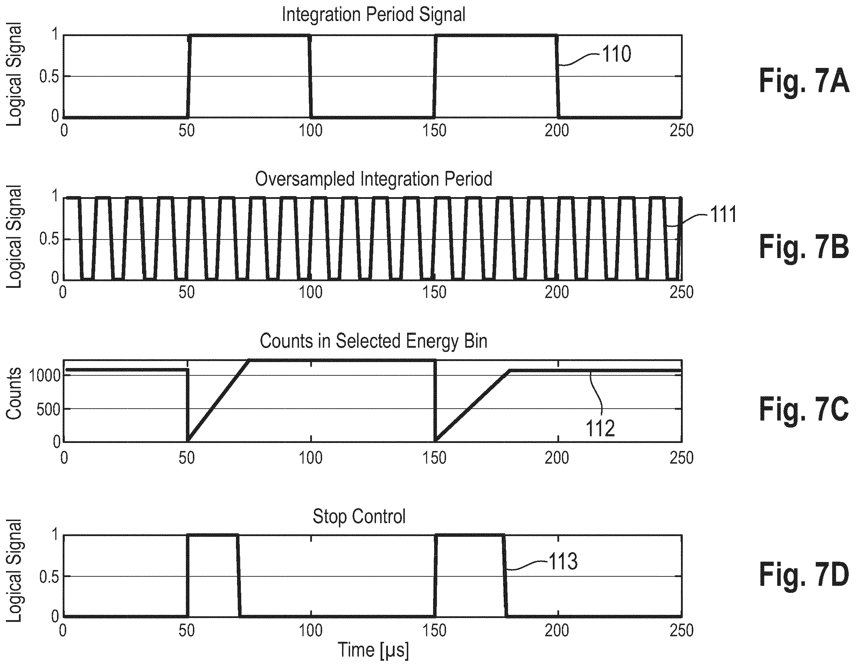

Fig. 7 shows diagrams of a logical integration period signal 110 (Fig. 7A), a logical oversampling signal 111 (Fig. 7B), a photon count signal 112 (Fig. 7C) and a stop control signal 113 (Fig. 7D) that may be used in another, more simplified embodiment of the photon counting detector. These signals show an example implementation for an eight times oversampled integration period. The recharge and energy estimation stops after the number of hits in a selected energy bin exceeds a programmable value and the next oversampled integration period starts.

In the example illustrated in Fig. 7 the integration intervals (Fig. 7B) are equidistant, but the integration intervals may be defined arbitrarily by a centralized pulse generator with high timing precision. The oversampled signal 111 can be derived from a variable integration period asynchronously, but also synchronous to a given system reference clock of high speed (e.g. at a frequency >100 MHz). The periods may be defined and known precisely for further processing the correct count rates.

The integration stops after a certain condition is met. As described above, it can be derived from a filling state of the histogram bins or including external signaling. In the above example, a hit count in an energy histogram above 1024 is used to stop the integration at the next rising edge of the oversampled integration period. In the example illustrated in Fig. 7, the first integration is stopped after 25 $\mu$s (2/8 of the integration period) and the second integration with lower count rate is stopped after 37.5 $\mu$s corresponding to 3/8 of the integration period. The counts in the energy histogram exceed the value of 1024 and vary with input rate accordingly. The counter in the above example requires only three bits (eight times oversampling as maximum entry), to be stored and transferred to indicate the effective integration time for correct post processing to get calibrated rates from this raw data stream.

Like in the embodiments described above, the normal use case for low radiation rate is not explicitly shown. There, the integration is only stopped by the start of the next integration period.

Another advantage of this embodiment is the simplified post-processing: The counts may be divided only by a known set of integration times, which are identical within the complete system, to get the radiation rates. Further simplification can be realized by multiplying with the inverse time-period (which may also be stored e.g. in a look-up table) for faster computation. It is also possible to spread the sensitive sub-periods equally over the acquisition time to prevent possible image artefacts. As an example, recharge may be enabled symmetrically over the integration period, like in the first 1/8 part and the last 1/8 part, in case only 1/4 of the integration period is sampled.

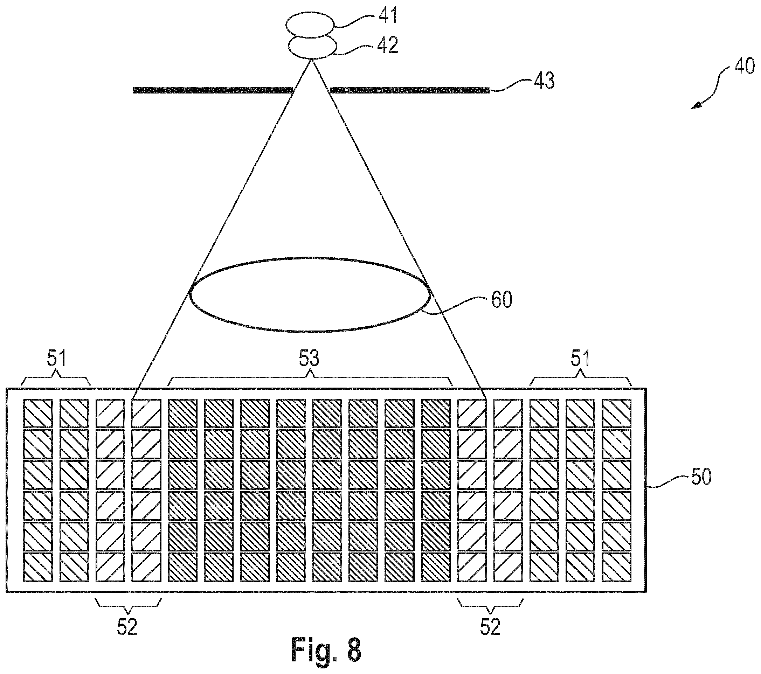

Still another embodiment of the photon counting detector according to the present invention makes use of a pre-scouting image of the examination object (e.g. a patient) to derive a certain pixel inhibit or exposure control programming parameter for each pixel. Fig. 8 shows a schematic diagram illustrating an imaging apparatus 40 using such an embodiment of a photon counting detector 50 according to the present invention. The imaging apparatus 40 comprises a scouting camera 41, a radiation (e.g. gamma or X-ray) source 42, a collimator 43 and the detector 50 comprising multiple pixels. Each pixel may be preprogramed to its exposure control coefficient depending of the prediction model created by a scouting image of the examination object 60 acquired by the scouting camera 41.

In Fig. 8 it is apparent that all the pixels 51 (at the outer edges) remain always out of the region of interest and will only be exposed to a direct x-ray beam. So, they can be disabled to save power and increase dynamic range of the pixel. On the other hand, the pixels 53 (in the middle) will be exposed to the most relevant region of the object's body and thus can be fully exposed to take as much radiation signals as possible. The pixels 52 in between the pixels 51 and 53, which lie at the object's edge, receive quite high radiation and are relevant for image reconstruction. The may be controlled or programmed to reduce the overall exposure by an appropriate exposure control coefficient (ECC). In this example, the ECC can have a value of 0 for pixels 51, 0.5 for pixels 52 and 1 for pixels 53. The ECC value can then be used to modulate the threshold value as described above with reference to the use of time counters or the duty cycle of the oversampling integration time as described above with respect to the use of an oversampled integration period.

Generally, the exposure control does not need to be a function that is only switched on or off completely. Depending on the location on the detector and time (i.e. rotation position) it may be adaptive in an embodiment to optimally save power. The ECC defines the rules to which this exposure control feature can vary, and it imposes limits.

The parameter ECC can define operating modes where regions are sampled with long exposure time (e.g. > 50 %, for instance for the body center imaged by pixels 53), with medium exposure time (e.g. 10 % - 50 %, for instance in the periphery of the body imaged by pixels 52), and a very low exposure time (e.g. 10 %, for instance for unused areas of direct exposure imaged by pixels 51).

The control or programming can be dynamically adapted depending on the rotational position of the detector array, and by accessing information of previous rotations. The number of areas, where pixels can be programmed or controlled, can also be increased with a multitude of linear or nonlinearly distributed values of ECC (from 0 to 1) depending the region of interest.

In another embodiment, instead of using a scout image to determine or predict the position of the object with respect to the detector, other means may be used. For instance, from the measurements made at different rotational positions of the source and the detector and the speed of rotation it can be predicted at which pixels will be exposed to direct radiation in a subsequent rotational position.

In summary, according to the present invention presents a solution by which the photon counting can be stopped when a stop condition is reached. For instance, the recharge of a pixel can be stopped by a programmable recharge control logic conditionally. The integration time from start of the integration period up to the individual stop (e.g. by disabling the recharge) may be stored by an integrated counter or given by an external signal, providing the actual and precise integration time (in ns range), to compute radiation rate estimates precisely. The detector and method according to the present invention act like a pixel-based exposure control, preventing any over-exposure at any time to provide useful acquisition data for image reconstruction.

The present invention may e.g. be used in scintillator based photon-counting CT, digital PET, digital SPECT, and high-energy physics detectors.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

Any reference signs in the claims should not be construed as limiting the scope.

**Claims**

1. Photon counting detector comprising:

   a scintillator (21) configured to convert incident gamma radiation into optical photons;
   a pixelated photodetector (20, 30) configured to detect the flux of optical photons wherein the pixelated photodetector is a silicon photomultiplier, SiPM, detector, wherein each photodetector pixel comprises an array of silicon avalanche photo diodes, SPADs; said photon counting detector being **characterized in** further comprising
   circuitry (23, 90) configured to carry out, per photodetector pixel, the steps of

   - controlling a stop timing at which one or more functions of the photodetector pixel are stopped;
   - determining a first photon count by accumulating the number of optical photons detected by the SPADs of the respective photodetector pixel from the start of an integration period up to the stop timing; and
   - estimating a second photon count based on the first photon count and the stop timing, the second photon count representing an estimate of the photon count for the total integration period;

wherein the circuitry (90) is configured to

- apply, per SPAD or groups of SPADs, a recharge signal to the respective one or more SPADs for recharging after a breakdown in response to impingement of an optical photon; and
- control, per photodetector pixel, as stop timing a recharge stop timing at which the application of a recharge signal to the respective one or more SPADs is stopped.

2. Photon counting detector as claimed in claim 1,
wherein the circuitry (23, 90) is configured to estimate the second photon count based on the first photon count and the time ratio of a non-measurement time period from the stop timing to the end of the integration period divided by a measurement time period from the start of the integration period to the stop timing.

3. Photon counting detector as claimed in claim 2,
wherein the circuitry (23, 90) is configured to estimate the second photon count by adding to the first photon count the product of the first photon count with the time ratio.

4. Photon counting detector as claimed in any one of the preceding claims,

wherein the circuitry (23, 90) comprises a time counter configured to count the time period from the start of the integration period up to the stop timing and
wherein the circuitry is configured to use this time period for estimating the second photon count.

5. Photon counting detector as claimed in any one of the preceding claims,

wherein the circuitry (23, 90) comprises a system counter configured to oversample the integration period and to count the number of sub-sampling periods from the start of the integration period up to the stop timing and
wherein the circuitry is configured to use this time period for estimating the second photon count.

6. Photon counting detector as claimed in any one of the preceding claims,
wherein the circuitry (23, 90) is configured to predict the position of an examination object with respect to the photon counting detector in the subsequent integration period and to control the stop timing based on the predicted position.

7. Photon counting detector as claimed in claim 6,
wherein the circuitry (23, 90) is configured to control the stop timing based on the predicted position by stopping operation and/or recharging of the SPADs of photodetector pixels that are predicted not to be covered by parts of the examination object earlier compared to SPADs of photodetector pixels that are predicted to be covered by parts of the examination object.

8. Photon counting detector as claimed in claim 6,
wherein the circuitry (23, 90) is configured to predict the position of an examination object with respect to the photon counting detector in the subsequent integration period based on a scout scan or image information.

9. Photon counting detector as claimed in any one of the preceding claims,
wherein the circuitry (23, 90) is configured to control, per photodetector pixel, the stop timing based on a stop condition.

10. Photon counting detector as claimed in claim 9,
wherein the circuitry (23, 90) is configured to control, per photodetector pixel, the stop timing based on the detection that one or more energy bins of the respective photodetector pixel have exceeded a respective count threshold and/or that the number of optical photons of the respective photodetector pixel has exceeded a respective photon threshold.

11. Photon counting detector as claimed in any one of the preceding claims,
wherein the circuitry (23, 90) is further configured to integrate the optical flux and determine an integration value up to the stop timing.

12. Photon counting detector as claimed in claim 1,

wherein each pixel of the pixelated photodetector comprises a plurality of cells,
wherein each cell comprises:

- a SPAD reverse-biased above a breakdown voltage of the SPAD;
- trigger logic connected to the SPAD and configured to output a trigger signal indicating whether the SPAD is in breakdown; and
- a conditional recharge circuit configured to recharge the SPAD conditional upon both (i) the recharge circuit applying the recharge signal to the cell and (ii) the trigger signal output by the trigger logic of the cell indicating the SPAD of the cell is in breakdown.

**13.** Imaging apparatus comprising a photon counting detector (20, 30) as claimed in any one of the preceding claims.

**14.** Photon counting method comprising, per photodetector pixel of a pixelated photodetector (20, 30), the steps of:

- controlling a stop timing at which one or more functions of the photodetector pixel are stopped, wherein the pixelated photodetector is configured to detect the flux of optical photons converted by a scintillator (21) from incident gamma radiation wherein each photodetector pixel comprises an array of silicon avalanche photo diodes, SPADs; said photon counting method being **characterized in** further comprising:

- determining, per photodetector pixel, a first photon count by accumulating the number of optical photons detected by the SPADs of the respective photodetector pixel from the start of an integration period up to the stop timing; and
- estimating, per photodetector pixel, a second photon count based on the first photon count and the stop timing, the second photon count representing an estimate of the photon count for the total integration period;
- applying, per SPAD or groups of SPADs, a recharge signal to the respective one or more SPADs for recharging after a breakdown in response to impingement of an optical photon; and
- controlling, per photodetector pixel, as stop timing a recharge stop timing at which the application of a recharge signal to the respective one or more SPADs is stopped.


**Patentansprüche**

**1.** Photonenzähldetektor umfassend:

einen Szintillator (21), der konfiguriert ist, um einfallende Gammastrahlung in optische Photonen umzuwandeln; einen pixelierten Photodetektor (20, 30), der konfiguriert, um den Fluss optischer Photonen zu detektieren, wobei es sich bei dem pixelierten Photodetektor um einen Silizium-Photovervielfacher-Detektor (SiPM-Detektor) handelt, wobei jedes Photodetektorpixel eine Anordnung von Silizium-Avalanche-Photodioden (SPADs) umfasst; wobei der Photonenzähldetektor **dadurch gekennzeichnet ist, dass** er weiter Folgendes umfasst:

Schaltlogik (23, 90), die konfiguriert ist, um pro Photodetektorpixel die folgenden Schritte auszuführen:

- Steuern eines Stoppzeitpunkts, zu dem eine oder mehrere Funktionen des Photodetektorpixels beendet werden;
- Ermitteln einer ersten Photonenzahl durch Aufsummieren der Anzahl optischer Photonen, die von den SPADs des jeweiligen Photodetektorpixels vom Beginn einer Integrationsperiode bis zum Stoppzeitpunkt detektiert werden; und
- Schätzen einer zweiten Photonenzahl auf der Grundlage der ersten Photonenzahl und des Stoppzeitpunkts, wobei die zweite Photonenzahl eine Schätzung der Photonenzahl für die gesamte Integrationsperiode darstellt;

wobei die Schaltlogik (90) konfiguriert ist zum

- Anlegen, pro SPAD oder Gruppe von SPADs, eines Wiederauladesignals an die jeweilige eine SPAD oder die jeweiligen mehreren SPADs, um diese nach einem Durchbruch infolge des Auftreffens eines optischen Photons wieder aufzuladen; und
- Steuern, pro Photodetektorpixel, als Stoppzeitpunkt, eines Stoppzeitpunkts des Wiederaufladevorgangs, zu dem das Anlegen eines Wiederaufladesignals an die jeweilige eine oder die jeweiligen mehreren SPADs beendet wird.

**2.** Photonenzähldetektor nach Anspruch 1,

wobei die Schaltlogik (23, 90) konfiguriert ist, um die zweite Photonenzahl auf der Grundlage der ersten Photonenzahl und des Zeitverhältnisses eines Nicht-Messzeitraums vom Stoppzeitpunkt bis zum Ende der Integrationsperiode dividiert durch einen Messzeitraum vom Beginn der Integrationsperiode bis zum Stoppzeitpunkt zu schätzen.

3. Photonenzähldetektor nach Anspruch 2,
wobei die Schaltlogik (23, 90) konfiguriert ist, um die zweite Photonenzahl zu schätzen, indem sie zu der ersten Photonenzahl das Produkt der ersten Photonenzahl mit dem Zeitverhältnis addiert.

4. Photonenzähldetektor nach einem der vorstehenden Ansprüche,

wobei die Schaltlogik (23, 90) einen Zeitzähler umfasst, der konfiguriert ist, um die Zeitspanne vom Beginn der Integrationsperiode bis zum Stoppzeitpunkt zu zählen, und
wobei die Schaltlogik konfiguriert ist, um diese Zeitspanne zum Schätzen der zweiten Photonenzahl zu verwenden.

5. Photonenzähldetektor nach einem der vorstehenden Ansprüche,

wobei die Schaltlogik (23, 90) einen Systemzähler umfasst, der konfiguriert ist, um die Integrationsperiode überabzutasten und die Anzahl der Unterabtastperioden vom Beginn der Integrationsperiode bis zum Stoppzeitpunkt zu zählen, und
wobei die Schaltlogik konfiguriert ist, um diese Zeitspanne zum Schätzen der zweiten Photonenzahl zu verwenden.

6. Photonenzähldetektor nach einem der vorstehenden Ansprüche,
wobei die Schaltlogik (23, 90) konfiguriert ist, um die Position eines Untersuchungsobjekts in Bezug auf den Photonenzähldetektor in der nachfolgenden Integrationsperiode vorherzusagen und den Stoppzeitpunkt auf der Grundlage der vorhergesagten Position zu steuern.

7. Photonenzähldetektor nach Anspruch 6,
wobei die Schaltlogik (23, 90) konfiguriert ist, um den Stoppzeitpunkt auf der Grundlage auf der vorhergesagten Position zu steuern, indem sie den Betrieb und/oder die Wiederaufladung der SPADs von Photodetektorpixeln, die voraussichtlich nicht von Teilen des Untersuchungsobjekts abgedeckt werden, früher beendet als bei SPADs von Photodetektorpixeln, die voraussichtlich von Teilen des Untersuchungsobjekts abgedeckt werden.

8. Photonenzähldetektor nach Anspruch 6,
wobei die Schaltlogik (23, 90) konfiguriert ist, um die Position eines Untersuchungsobjekts in Bezug auf den Photonenzähldetektor in der nachfolgenden Integrationsperiode auf der Grundlage eines Scout-Scans oder von Bildinformationen vorherzusagen.

9. Photonenzähldetektor nach einem der vorstehenden Ansprüche,
wobei die Schaltlogik (23, 90) konfiguriert ist, um pro Photodetektorpixel den Stoppzeitpunkt auf der Grundlage einer Stoppbedingung zu steuern.

10. Photonenzähldetektor nach Anspruch 9,
wobei die Schaltlogik (23, 90) konfiguriert ist, um pro Photodetektorpixel den Stoppzeitpunkt auf der Grundlage des Erkennens zu steuern, dass ein oder mehrere Energiebins des jeweiligen Photodetektorpixels einen entsprechenden Zählschwellenwert überschritten haben und/oder dass die Anzahl der optischen Photonen des jeweiligen Photodetektorpixels einen entsprechenden Photonenschwellenwert überschritten hat.

11. Photonenzähldetektor nach einem der vorstehenden Ansprüche,
wobei die Schaltlogik (23, 90) ferner konfiguriert ist, um den optischen Fluss zu integrieren und einen Integrationswert bis zum Stoppzeitpunkt zu ermitteln.

12. Photonenzähldetektor nach Anspruch 1,
wobei jedes Pixel des pixelierten Photodetektors eine Vielzahl von Zellen umfasst, wobei jede Zelle Folgendes umfasst:

- eine SPAD, die in Sperrrichtung über einer Durchbruchspannung der SPAD betrieben wird;

- Triggerlogik, die mit der SPAD verbunden und konfiguriert ist, um ein Triggersignal auszugeben, das angibt, ob sich die SPAD im Durchbruchzustand befindet; und
- eine bedingte Wiederaufladeschaltung, die konfiguriert ist, um die SPAD wieder aufzuladen, wenn sowohl (i) die Wiederaufladeschaltung das Wiederaufladesignal an die Zelle anlegt als auch (ii) das von der Triggerlogik der Zelle ausgegebene Triggersignal angibt, dass sich die SPAD der Zelle im Durchbruchzustand befindet.

13. Bildgebende Einrichtung umfassend einen Photonenzähldetektor (20, 30) nach einem der vorstehenden Ansprüche.

14. Photonenzählverfahren, umfassend pro Photodetektorpixel eines pixelierten Photodetektors (20, 30) die folgenden Schritte:

- Steuern eines Stoppzeitpunkts, zu dem eine oder mehrere Funktionen des Photodetektorpixels beendet werden, wobei der pixelierte Photodetektor konfiguriert ist, um den Fluss optischer Photonen zu detektieren, die von einem Szintillator (21) aus einfallender Gammastrahlung umgewandelt werden, wobei jedes Photodetektorpixel eine Anordnung von Silizium-Avalanche-Photodioden (SPADs) umfasst; wobei das Photonenzählverfahren **dadurch gekennzeichnet ist, dass** es weiter Folgendes umfasst:

- Ermitteln, pro Phototetektorpixel, einer ersten Photonenzahl durch Aufsummieren der Anzahl optischer Photonen, die von den SPADs des jeweiligen Photodetektorpixels vom Beginn einer Integrationsperiode bis zum Stoppzeitpunkt detektiert werden; und
- Schätzen, pro Photodetektorpixel, einer zweiten Photonenzahl auf der Grundlage der ersten Photonenzahl und des Stoppzeitpunkts, wobei die zweite Photonenzahl eine Schätzung der Photonenzahl für die gesamte Integrationsperiode darstellt;
- Anlegen, pro SPAD oder Gruppe von SPADs, eines Wiederaufladesignals an die jeweilige eine SPAD oder die jeweiligen mehreren SPADs, um diese nach einem Durchbruch infolge des Auftreffens eines optischen Photons wieder aufzuladen; und
- Steuern, pro Photodetektorpixel, als Stoppzeitpunkt, eines Stoppzeitpunkts des Wiederaufladevorgangs, zu dem das Anlegen eines Wiederaufladesignals an die jeweilige eine oder die jeweiligen mehreren SPADs beendet wird.

## Revendications

1. Détecteur de comptage de photons comprenant :

un scintillateur (21) configuré pour convertir un rayonnement gamma incident en photons optiques ;
un photodétecteur pixélisé (20, 30) configuré pour détecter le flux de photons optiques, dans lequel ce photodétecteur pixélisé est un détecteur à photomultiplicateur en silicium (SiPM), dans lequel chaque pixel comprend un réseau de photodiodes à avalanche en silicium (SPAD) ; ledit détecteur de comptage de photons étant en outre **caractérisé en ce qu'**il comprend en outre
un circuit (23, 90) configuré pour effectuer, par pixel du photodétecteur, les étapes de

- commande d'un moment d'arrêt auquel une ou plusieurs fonctions du pixel du photodétecteur sont arrêtées ;
- détermination d'un premier comptage de photons par l'accumulation du nombre de photons optiques détectés par les SPAD du pixel de photodétecteur respectif depuis le début d'une période d'intégration jusqu'au moment d'arrêt ; et
- estimation d'un second comptage de photons basé sur le premier comptage de photons et le moment d'arrêt, le second comptage de photons représentant une estimation du comptage de photons pour la période d'intégration totale ;

dans lequel le circuit (90) est configuré pour

- appliquer, par SPAD ou groupes de SPAD, un signal de recharge au(x) SPAD concerné(s) pour recharger après une panne en réponse à l'impact d'un photon optique ; et
- commander, par pixel du photodétecteur, un moment d'arrêt de recharge auquel l'application d'un signal de recharge au ou aux SPAD respectifs est interrompue.

**2.** Détecteur de comptage de photons selon la revendication 1,
dans lequel le circuit (23, 90) est configuré pour estimer le second comptage de photons en fonction du premier comptage de photons et du rapport temporel d'une période de temps non mesurée entre le moment d'arrêt et la fin de la période d'intégration divisé par une période de temps de mesure entre le début de la période d'intégration et le moment d'arrêt.

**3.** Détecteur de comptage de photons selon la revendication 2,
dans lequel le circuit (23, 90) est configuré pour estimer le second nombre de photons en ajoutant au premier nombre de photons le produit du premier nombre de photons avec le rapport temporel.

**4.** Détecteur de comptage de photons selon l'une quelconque des revendications précédentes,

dans lequel le circuit (23, 90) comprend un compteur de temps configuré pour compter la période de temps entre le début de la période d'intégration et le moment de l'arrêt, et
dans lequel le circuit est configuré pour utiliser cette période de temps afin d'estimer le nombre de photons du second ordre.

**5.** Détecteur de comptage de photons selon l'une quelconque des revendications précédentes,

dans lequel le circuit (23, 90) comprend un compteur système configuré pour suréchantillonner la période d'intégration et pour compter le nombre de périodes de sous-échantillonnage depuis le début de la période d'intégration jusqu'au moment d'arrêt et
dans lequel le circuit est configuré pour utiliser cette période de temps afin d'estimer le nombre de photons du second ordre.

**6.** Détecteur de comptage de photons selon l'une quelconque des revendications précédentes,
dans lequel le circuit (23, 90) est configuré pour prédire la position d'un objet d'examen par rapport au détecteur de comptage de photons dans la période d'intégration suivante et pour commander le moment d'arrêt en fonction de la position prédite.

**7.** Détecteur de comptage de photons selon la revendication 6,
dans lequel le circuit (23, 90) est configuré pour commander le moment d'arrêt en fonction de la position prévue par l'opération d'arrêt et/ou la recharge des SPAD des pixels du photodétecteur qui ne devraient pas être recouverts par des parties de l'objet examiné plus tôt que celle des SPAD des pixels du photodétecteur qui devraient être recouverts par des parties de l'objet examiné.

**8.** Détecteur de comptage de photons selon la revendication 6,
dans lequel le circuit (23, 90) est configuré pour prédire la position d'un objet d'examen par rapport au détecteur de comptage de photons dans la période d'intégration suivante sur la base d'un balayage de reconnaissance ou d'informations d'image.

**9.** Détecteur de comptage de photons selon l'une quelconque des revendications précédentes,
dans lequel le circuit (23, 90) est configuré pour commander, par pixel du photodétecteur, le moment d'arrêt en fonction d'une condition d'arrêt.

**10.** Détecteur de comptage de photons selon la revendication 9,
dans lequel le circuit (23, 90) est configuré pour commander, pour chaque pixel du photodétecteur, le moment d'arrêt en fonction de la détection qu'un ou plusieurs intervalles d'énergie du pixel du photodétecteur respectif ont dépassé un seuil de comptage respectif et/ou que le nombre de photons optiques du pixel du photodétecteur respectif a dépassé un seuil de photons respectif.

**11.** Détecteur de comptage de photons selon l'une quelconque des revendications précédentes,
dans lequel le circuit (23, 90) est en outre configuré pour intégrer le flux optique et déterminer une valeur d'intégration jusqu'au moment d'arrêt.

**12.** Détecteur de comptage de photons selon la revendication 1,
dans lequel chaque pixel du photodétecteur pixélisé comprend une pluralité de cellules, dans lequel chaque cellule comprend :

- un SPAD polarisé en inverse au-dessus d'une tension de claquage du SPAD ;
- une logique de déclenchement connectée au SPAD et configurée pour émettre un signal de déclenchement indiquant si le SPAD est en panne ; et
- un circuit de recharge conditionnel configuré pour recharger le SPAD sous réserve à la fois (i) que le circuit de recharge applique le signal de recharge à la cellule et (ii) que le signal de déclenchement soit émis par la logique de déclenchement de la cellule indiquant que le SPAD de la cellule est en panne.

13. Appareil d'imagerie comprenant un détecteur de comptage de photons (20, 30) selon l'une quelconque des revendications précédentes.

14. Procédé de comptage de photons comprenant, par pixel de photodétecteur d'un photodétecteur pixélisé (20, 30), les étapes de :

    - commande d'un moment d'arrêt à laquelle une ou plusieurs fonctions du pixel du photodétecteur sont interrompues, dans lequel le photodétecteur pixélisé est configuré pour détecter le flux de photons optiques convertis par un scintillateur (21) à partir d'un rayonnement gamma incident, dans lequel chaque pixel du photodétecteur comprend un réseau de photodiodes à avalanche en silicium (SPAD) ; ledit procédé de comptage de photons étant **caractérisée en ce qu'**il comprend en outre :

        - la détermination, par pixel du photodétecteur, d'un premier comptage de photons en accumulant le nombre de photons optiques détectés par les SPAD du pixel de photodétecteur respectif depuis le début d'une période d'intégration jusqu'au moment d'arrêt ; et
        - l'estimation, par pixel du photodétecteur, d'un second comptage de photons basé sur le premier comptage de photons et le temps d'arrêt, le second comptage de photons représentant une estimation du comptage de photons pour la période d'intégration totale ;
        - application, par SPAD ou groupes de SPAD, d'un signal de recharge au(x) SPAD concerné(s) pour recharger après une panne en réponse à l'impact d'un photon optique ; et
        - commande, par pixel du photodétecteur, d'un moment d'arrêt de recharge auquel l'application d'un signal de recharge au ou aux SPAD respectifs est interrompue.

Fig. 1A

Fig. 1B

EP 4 523 015 B1

**Fig. 2**

Integration Period Signal

Fig. 3A

Counts in Selected Energy Bin

Fig. 3B

Stop Control

Fig. 3C

Time [µs]

EP 4 523 015 B1

**Fig. 4**

EP 4 523 015 B1

$V_{bias} = V_{breakdown} + V_{excess}$

91

K

A

92

CELL ELECTRONICS

event

97

SYSTEM

95

1 BIT MEMORY CELL

enable

96

local recharge

94

recharge

OR GATE

93

recharge (system)

GND

Recharge (external)

Fig. 5

Fig. 6A

Fig. 6B

Fig. 6C

Fig. 7A

Fig. 7B

Fig. 7C

Fig. 7D

**Fig. 8**

EP 4 523 015 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9268033 B2
- US 10078141 B2
- US 2011017918 A1